# FASCICULE DE BREVET EUROPEEN

(11) **EP 0 774 876 B1**
(45) Date de publication et mention de la délivrance du brevet: **30.07.2003**
(21) Numéro de dépôt: 96402386.5
(22) Date de dépôt: 08.11.1996
(51) Int. Cl.: H04Q 7/34

(54) **Test de cellule dans un réseau de télécommunication cellulaire**
Zellenprüfung in einem zellularen Übertragungsnetzwerk
Cell testing in cellular telecommunication network

(30) Priorité: 15.11.1995 FR 9513621
(43) Date de publication de la demande: 21.05.1997
(73) Titulaire: FRANCE TELECOM, 75015 Paris (FR)
(72) Inventeur: Gourdin, André, 78120 Rambouillet (FR); Bosc, Jean-Louis, 69100 Villeurbanne (FR); Ladran, Kamal, 93600 Aulnay-sous-Bois (FR)
(74) Mandataire: Cabinet Martinet & Lapoux

(56) Documents cités:
- EP-A- 0 536 544
- WO-A-95/19686
- US-A- 5 357 557
- INTERNATIONAL CONFERENCE ON DIGITAL LAND MOBILE RADIO COMMUNICATIONS, 30 Juin 1987 - 3 Juillet 1987, VENICE, IT, pages 497-506, XP002011123 KALL ET AL.: "Maintenance information in the GSM System."

## Description

La présente invention concerne un test d'au moins une cellule dans un réseau de télécommunication cellulaire pour détecter des défauts de fonctionnement particulièrement dans des moyens de communication fixes desservant ladite cellule.

Un système de télécommunication cellulaire comporte des stations mobiles et des moyens de communication fixes. Les moyens de communication fixes comprennent, en outre, des stations radio de base fixes à chacune desquelles sont assignés des canaux de radiocommunication pour échanger des informations numériques avec les stations mobiles dispersées dans les cellules du réseau. Au moins un canal radio de signalisation supporte des signaux de signalisation protocolaires pour établir et rompre des communications entre des stations mobiles et des terminaux téléphoniques reliés aux moyens de communications fixes à travers le réseau téléphonique commuté. Les moyens de communication fixes comprennent également des contrôleurs, des centres de commutation, des enregistreurs de localisation et des supports de transmission d'information numérique et de signaux téléphoniques afin de commuter des communications demandées par les stations mobiles et destinées aux stations mobiles, localiser les stations mobiles dans le réseau et gérer le trafic dans le réseau de télécommunication cellulaire.

Dans les réseaux de télécommunication cellulaires tels que définis ci-dessus, des dysfonctionnements de moyens directement liés aux transmissions et réceptions de communications dans une cellule donnée ne sont pas détectés par des moyens de supervision et de maintenance inclus dans le réseau de télécommunication cellulaire. Par exemple, une irrégularité intervenant au cours d'une communication avec une station mobile dans une cellule donnée n'est pas signalée. Plus généralement, aucun moyen de surveillance n'est prévu actuellement pour détecter tout arrêt ou rupture intempestif pendant l'établissement ou la phase de conversation ou la libération d'une communication de départ ou d'arrivée, comme décrit, par exemple, dans le document "INTERNATIONAL CONFERENCE ON DIGITAL LAND MOBILE RADIO COMMUNICATIONS, 30 Juin 1987 - 3 Juillet 1987, VENICE, IT, pages 497-506, KALL ET AL.: 'Maintenance information in the GSM System.' L'invention a pour **objectif** de tester une cellule dans un réseau de télécommunication cellulaire afin de détecter des incidents au cours d'une communication transitant à travers la station de base fixe associée à ladite cellule, tout en maintenant le trafic normal dans le réseau.

A cette fin, un procédé pour tester une cellule dans un réseau de télécommunication cellulaire comprenant des moyens de communication fixes desservant plusieurs stations de base associées respectivement à des cellules du réseau est caractérisé par :
- un placement d'une station mobile de test dans le réseau, et la liaison d'un moyen terminal aux moyens de communication fixes,
   et par les étapes suivantes :

- établissement d'une première communication demandée par le moyen terminal entre le moyen terminal et la station mobile de test,
- transmission de premiers paramètres depuis le moyen terminal vers la station mobile de test si la première communication est établie,
- rupture de la première communication par la station mobile si les premiers paramètres sont reçus dans la station mobile de test,
- établissement d'une seconde communication demandée par la station mobile entre la station mobile de test et le moyen terminal à travers la cellule à tester après la rupture de la première communication,
- émission de seconds paramètres depuis la station mobile vers le moyen terminal si la seconde communication est établie, et
- rupture de la seconde communication si les seconds paramètres sont reçus dans le moyen terminal.

Selon l'invention, le bon état de fonctionnement de la cellule à tester est constaté par le moyen terminal lorsque toutes lesdites étapes suivantes énoncées ci-dessus sont effectuées successivement sans incident. Brièvement, la cellule à tester est considérée en état de bon fonctionnement lorsque la station mobile de test placée dans la cellule à tester établit et rompt normalement la seconde communication en réponse à la rupture de la première communication demandée par le moyen terminal.

Au contraire, si un moyen électronique lié à l'émission et/ou la réception de communication dans la cellule à tester est défaillant, l'une desdites étapes suivantes énoncées ci-dessus n'est pas effectuée ou est effectuée partiellement, et les autres étapes succédant à ladite une étape ne sont jamais effectuées. Selon l'invention, le moyen terminal arrête ou rompt la communication en cours, c'est-à-dire la première ou seconde communication au cours de laquelle le moyen électronique devient défaillant, en réponse à l'un au moins des incidents suivants :
- défaut d'établissement de la première communication,
- absence de rupture de la première communication après expiration d'une première temporisation armée après la transmission des premiers paramètres,
- défaut d'établissement de la seconde communication après expiration d'une seconde temporisation armée après la rupture de la première communication,
- absence de réception des seconds paramètres après expiration d'une troisième temporisation armée après l'établissement de la seconde communication, et
- erreur dans les seconds paramètres reçus dans le moyen terminal.

Une erreur détectée dans les seconds paramètres reçus par le moyen terminal peut être l'une des erreurs suivantes :
- nombre incorrect de digits représentatifs de l'un des seconds paramètres,
- digit erroné précédant ou succédant à l'un des seconds paramètres, et
- l'un erroné des seconds paramètres.

De préférence, le moyen terminal effectue cycliquement lesdites étapes suivantes énoncées ci-dessus pour tester périodiquement ladite cellule à tester, cumule les incidents et produit une alarme lorsque le cumul d'un incident excède un nombre prédéterminé pendant une période prédéterminée. Le nombre prédéterminé et la période prédéterminée sont choisis préalablement en fonction de statistiques de défaillances de trafic dans la cellule à tester de manière à ne pas signaler des incidents fugitifs ne nécessitant pas l'intervention d'une équipe de maintenance.

La station mobile de test participe également à la détection de défaillances de moyens électroniques liés à l'émission et/ou la réception de communication dans la cellule à tester, aussi bien au cours de la première que de la seconde communication.

Selon l'invention, la station mobile de test rompt la première communication notamment en réponse à l'un des événements suivants :
- absence de réception des premiers paramètres après expiration d'une temporisation prédéterminée armée par la station mobile de test après l'établissement de la première communication, et
- erreur dans l'un des premiers paramètres reçus dans la station mobile de test.

Egalement selon l'invention, la station mobile de test rompt la seconde communication notamment en réponse à l'un des événements suivants :
- arrêt anticipé de la seconde communication avant l'émission des seconds paramètres par la station mobile de test, et
- expiration d'une temporisation prédéterminée armée par la station mobile de test après l'émission des seconds paramètres.

Au moins l'un des premiers paramètres reçus correctement par la station mobile de test peut être l'un des seconds paramètres émis par la station mobile de test. Le moyen terminal peut ainsi vérifier la transmission correcte de données vers et depuis la station mobile de test, particulièrement à travers un canal radio entre la station mobile de test et la station de base associée à la cellule testée, en comparant le premier paramètre retransmis par la station mobile de test pendant la phase de conversation de la seconde communication avec le premier paramètre initialement transmis par le moyen terminal pendant la phase de conversation de la première communication.

Les premiers paramètres transmis par le moyen terminal servent à spécifier à la station mobile de test notamment la cellule à tester, à travers laquelle doit être établie la seconde communication, et le demandé, c'est-à-dire le moyen terminal, à appeler pour la seconde communication, ainsi qu'optionnellement un test à réaliser. Les seconds paramètres émis par la station mobile de test servent à confirmer au moyen terminal la prise de la cellule testée. Selon l'invention, les premiers paramètres peuvent comprendre l'un au moins des numéros suivants : un numéro de la cellule à tester, un numéro d'appel téléphonique du moyen terminal, un numéro prédéterminé identifiant le moyen terminal, et un numéro identifiant ladite première communication, et les seconds paramètres peuvent comprendre l'un au moins desdits numéro de la cellule à tester, numéro prédéterminé identifiant le moyen terminal, et numéro identifiant ladite première communication.

Les premiers paramètres peuvent être transmis par le moyen terminal sous la forme d'une séquence de digits en code à multifréquence et les seconds paramètres peuvent être émis par la station mobile de test sous la forme d'une séquence de digits en code à multifréquence. Les moyens de transmission et de réception jalonnant les routes suivies par les première et seconde communications entre le moyen terminal et la station mobile de test sont alors transparents aux paramètres, comme des signaux de parole transmis normalement au cours de la phase de conversation d'une communication avec une station mobile du réseau.

De préférence, le moyen terminal est relié à travers le réseau téléphonique commuté aux moyens de communication fixes, de manière à surveiller de nombreuses cellules dans différentes zones de localisation du réseau. Toutefois, le moyen terminal pourrait être relié par exemple à un seul centre de commutation du réseau pour ne surveiller que la zone de localisation correspondante.

Dans ce cas, le moyen terminal peut effectuer cycliquement lesdites étapes suivantes énoncées ci-dessus pour des cellules à tester prédéterminées dans le réseau de télécommunication cellulaire.

D'autres caractéristiques et avantages de la présente invention apparaîtront plus clairement à la lecture de la description suivante de plusieurs réalisations préférées de l'invention en référence aux **dessins annexés** correspondants dans lesquels :
- la figure 1 est un bloc-diagramme d'un réseau de télécommunication cellulaire connu dans lequel un moyen terminal, appelé serveur ci-après, et des stations mobiles de test pour mettre en oeuvre le procédé de test selon l'invention sont implantés ;
- la figure 2 est un bloc-diagramme schématique d'une station mobile de test ;
- la figure 3 est un bloc-diagramme schématique du serveur ;
- la figure 4 montre une première séquence de premiers paramètres en code à multifréquence transmis par le serveur au cours d'une première communication ;
- la figure 5 montre une seconde séquence de seconds paramètres en code à multifréquences transmis par une station mobile de test au cours d'une seconde communication ;
- la figure 6A est un algorithme d'étapes de fonctionnement du serveur pendant la première communication ;
- la figure 6B est un algorithme d'étapes de fonctionnement de la station mobile de test pendant la première communication ;
- la figure 7A est un algorithme d'étapes de fonctionnement du serveur pendant la seconde communication ; et
- la figure 7B est un algorithme d'étapes de fonctionnement de la station mobile de test pendant la seconde communication.

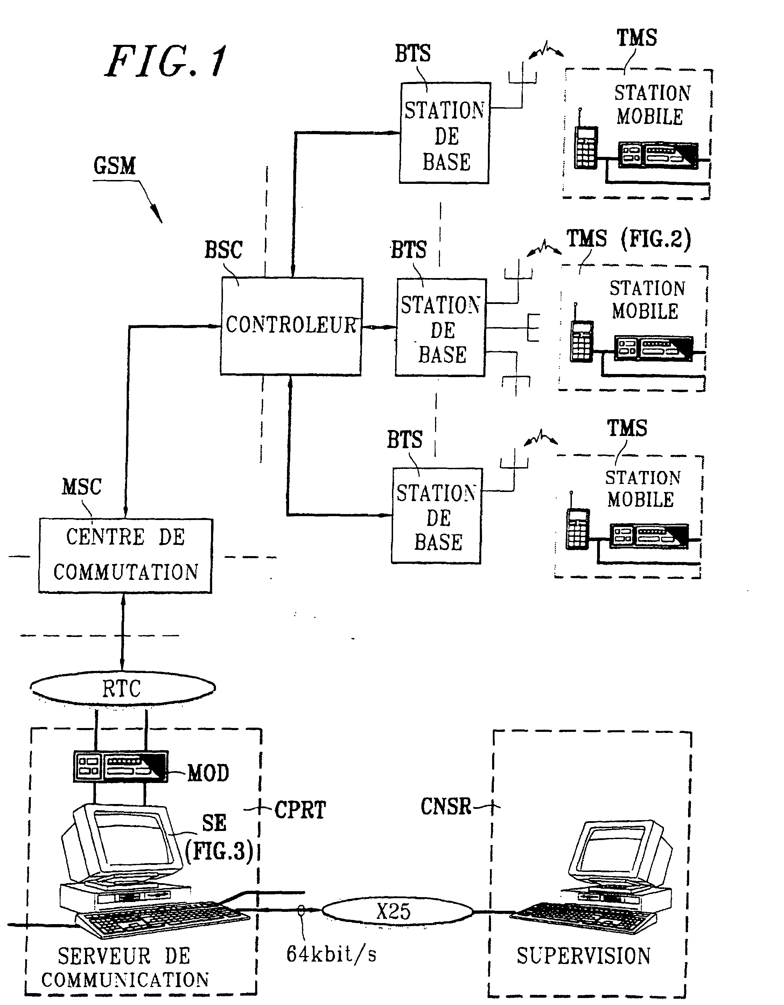

A titre d'exemple non limitatif, référence est faite dans la figure 1 aux principales entités dans le **réseau de télécommunication cellulaire** numérique GSM (Global System for Mobile Communication) défini par l'institut ETSI (European Telecommunications Standards Institute). Les entités sont un centre de commutation de rattachement MSC (Mobile Service Switching Center) qui constitue une interface entre le réseau de télécommunication cellulaire GSM et le réseau téléphonique commuté RTC, un contrôleur de stations de base BSC (Base Station Controller), et plusieurs stations de base fixes BTS (Base Transceiver Station). En général, chaque station de base est associée à au moins une aire, dite cellule, dans laquelle n'importe quelle station mobile se trouvant dans la cellule peut être en communication avec le réseau RTC par l'intermédiaire de l'équipement transmetteur-récepteur radio de la station de base.

Les stations mobiles illustrées dans la figure 1 sont des stations mobiles de test autonomes TMS spécifiques à l'invention qui en pratique sont fixes dans le réseau de télécommunication cellulaire GSM, et sont placées par exemple à proximité de stations de base BTS associées à des cellules à tester respectivement.

Pour la mise en oeuvre du procédé de test de cellule selon l'invention, au moins un moyen terminal sous la forme d'un serveur SE est installé dans un centre principal de radiotéléphone CPRT, et relié par un modem MOD au réseau téléphonique commuté RTC. En pratique, le serveur est cycliquement en liaison avec quelques centaines de paires de station de base BTS et station mobile de test TMS pour tester les quelques centaines de cellules correspondantes du réseau de télécommunication cellulaire GSM.

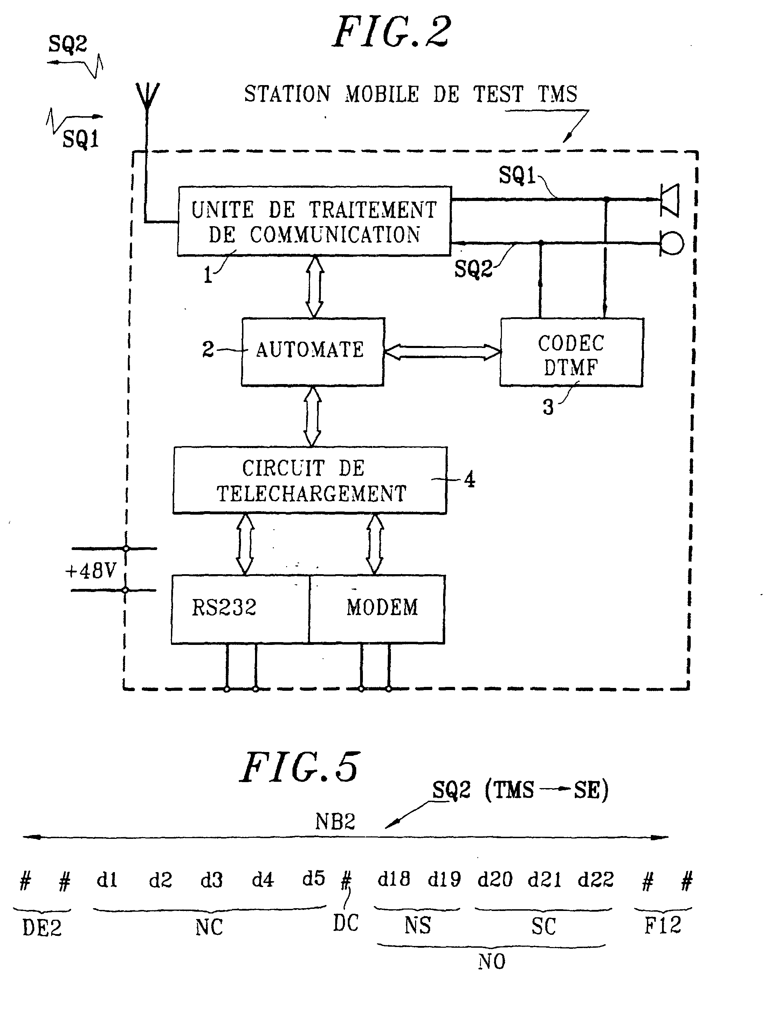

Comme montré schématiquement à la figure 2, une **station mobile de test** TMS spécifique à l'invention réunit dans une unité de traitement de communication 1 des moyens de réception et de transmission radio, des moyens de sélection de canal radio, des moyens de traitement de signaux de signalisation et des moyens de codage et de décodage de signaux de parole qui sont en eux-mêmes connus dans une station mobile classique d'un réseau de télécommunication cellulaire, en particulier tel que le réseau GSM. Un processeur inclus dans l'unité 1 traite classiquement les trois phases d'une communication, telles que l'établissement, la phase de conversation et la rupture, aussi bien pour une communication d'arrivée, dite également appel entrant dans la station mobile de test, que pour une communication de départ, dite également appel sortant de la station mobile de test. En particulier, l'unité 1 signale automatiquement et classiquement selon les recommandations GSM, dès la première mise en fonctionnement effective de la station TMS dans la cellule à tester et ultérieurement lors de changement d'affectation de cellule, la localisation de la station TMS à des enregistreurs de données centrales et de zone de localisation HRL (Home Local Register) et VRL (Visited Location Register) du centre de commutation de réseau GSM.

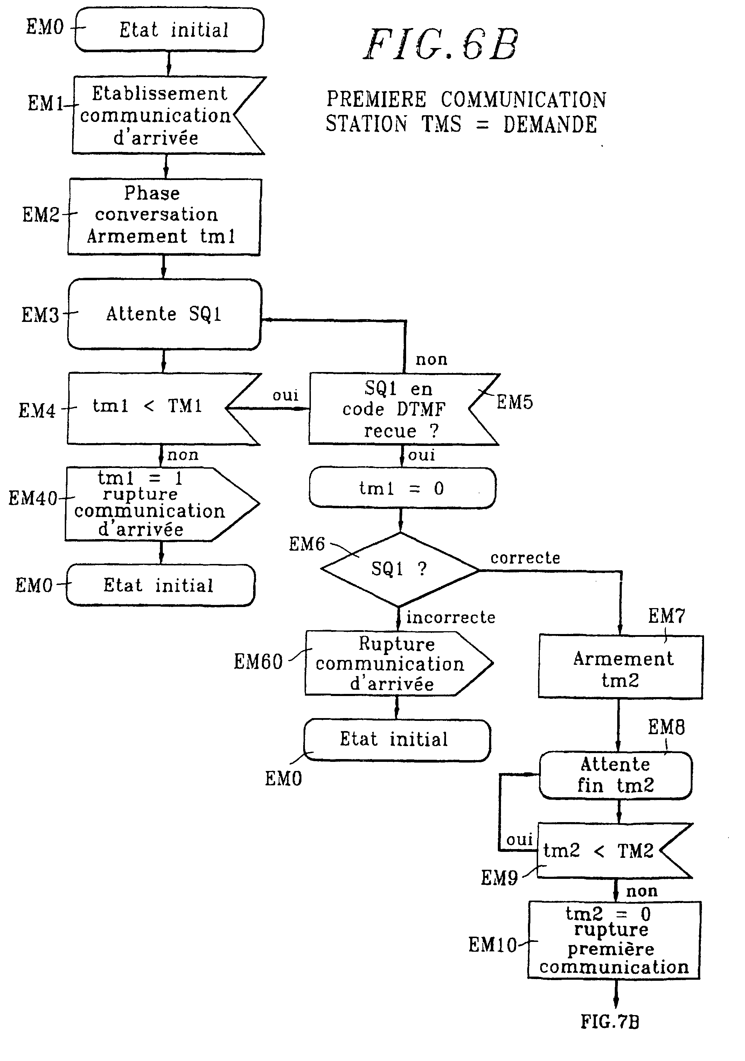

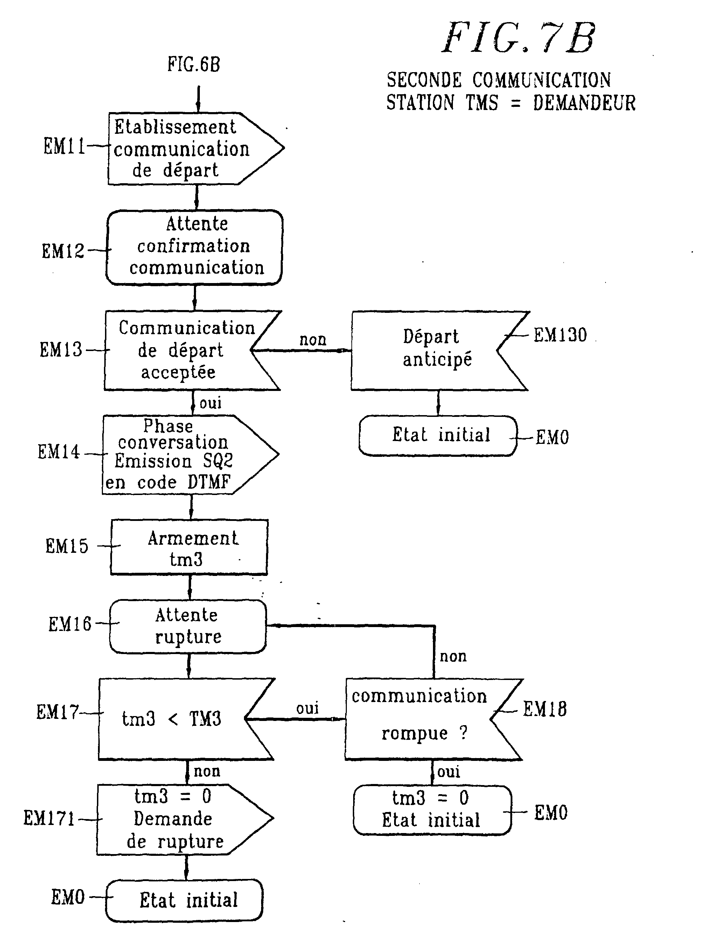

La station mobile de test TMS comprend également un automate 2 destiné à accomplir des étapes EMO à EM18 montrées aux figures 6B et 7B pour traiter une communication d'arrivée demandée par le serveur SE, puis une communication de départ demandée par la station mobile de test TMS selon l'invention.

L'automate 2 commande en outre un codec 3 pour coder et décoder à multifréquence DTMF (Dual Tone MultiFrequency). Un code à multifréquence est constitué classiquement par une combinaison d'une fréquence parmi trois et d'une fréquence parmi quatre, les sept fréquences étant comprises dans la bande passante d'audiofréquence utilisée en téléphonie. chacun des chiffres 0 à 9 et des caractères * et # d'un clavier téléphonique est associé à une combinaison de deux fréquences parmi douze distinctes. Un décodeur inclus dans le codec 3 est connecté à la sortie d'un convertisseur numérique-analogique inclus dans l'unité 1. Un codeur inclus dans le codec 3 est connecté à l'entrée d'un convertisseur analogique-numérique inclus dans l'unité 1. Les convertisseurs numérique-analogique et analogique-numérique matérialisent classiquement l'entrée d'une voie de réception de haut-parleur et la sortie d'une voie de transmission microphonique dans une station mobile classique. L'automate 2 active le décodeur pendant la phase de conversation d'une première commmunication demandée par le serveur SE pour décoder une première séquence SQ1 de premiers paramètres en code DTMF à traiter par l'automate 2. L'automate 2 active le codeur pendant la phase de conversation d'une seconde communication demandée par la station mobile de test TMS après la rupture normale de la première communication pour coder en code DTMF une seconde séquence SQ2 de seconds paramètres à transmettre par l'automate 2 au serveur SE.

La station mobile de test TMS montrée à la figure 2 comprend optionnellement un port de sortie normalisé RS232 et un modem connectés à un circuit de téléchargement 4 pour notamment télécharger un logiciel ou modifier des fonctionnalités d'un logiciel déjà enregistré dans la station mobile de test, au moyen d'un microordinateur portable ou à travers le réseau téléphonique commuté. La station mobile de test TMS est connectée en pratique à une alimentation de tension continue de 48 V disponible sur le site de la station de base BTS associée. La station mobile de test est de préférence entourée par un blindage pour la protéger contre des rayonnements électromagnétiques parasites présents sur certains sites de station de base BTS.

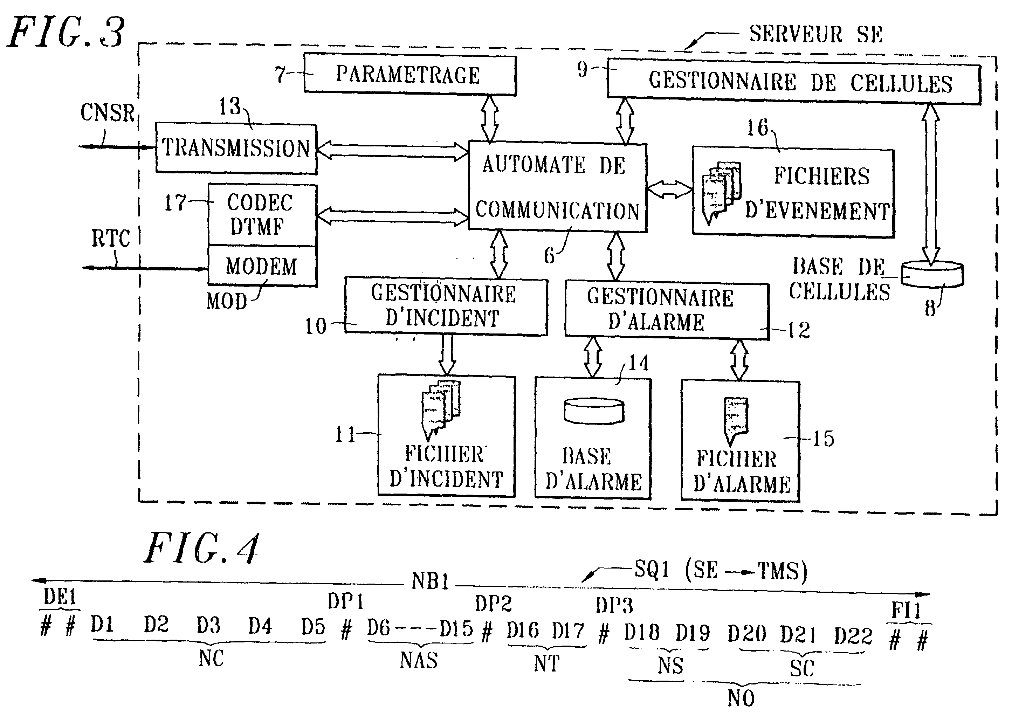

En référence au bloc-diagramme schématique de la figure 3, les éléments logiciels du **serveur** SE sont organisés autour d'un automate de communication 6.

L'automate de communication 6 est relié à un circuit de paramétrage 7. Le circuit 7 contient un numéro prédéterminé à deux chiffres NS identifiant le serveur SE et un numéro d'appel téléphonique du serveur à 10 chiffres NAS ainsi que des programmes pour communiquer cycliquement, selon le procédé de l'invention, avec chacune des stations mobiles de test TMS spécifiques à l'invention et supervisées par le serveur. Par exemple, le serveur surveille quelques centaines de stations de base BTS, soit automatiquement pendant des plages horaires programmées, soit manuellement, et peut établir huit communications simultanées à travers le réseau téléphonique commuté RTC.

Le serveur SE comprend également une base de données de cellules à tester 8 contrôlée par un gestionnaire de cellules 9. Pour chaque cellule à tester, les informations suivantes sont notamment enregistrées dans la base de données de cellule 8 et modifiables indépendamment les unes des autres :
un numéro NC de la cellule,
un nom de la cellule,
un numéro de test à réaliser NT,
un numéro de séquence de communication à trois digits SC compris entre 0 et 255 à inclure avec le numéro de serveur NS pour constituer un numéro d'ordre de communication NO à transmettre par le serveur SE vers la station mobile de test TMS incluse dans la cellule à tester,
un numéro d'appel téléphonique de la station mobile de test mémorisé en permanence dans la base de données 8 pour une communication de départ depuis le serveur,
une valeur courante de répétition d'un test en cours de réalisation, et
les nombres cumulés de six incidents prédéterminés I1 à I6 détectés par le serveur au cours de plusieurs cycles successifs de procédé de test selon l'invention relatifs à la cellule à tester.

Un gestionnaire d'incident 10 traite les incidents I1 à I6 pour les différentes cellules testées cycliquement par le serveur de manière à les consigner dans un fichier d'incident 11 où ils peuvent être classés en fonction du mode de fonctionnement sélectionné de l'automate 6 qui peut être automatique ou manuel pour tester les cellules. A chaque incident sont inscrits dans le fichier 11 la date et l'heure de l'incident, la cause de l'incident, le numéro et le nom de la cellule correspondante, le numéro d'appel téléphonique de la station mobile de test, et le numéro de séquence SC de la communication et le type de communication, serveur vers station mobile de test ou station mobile de test vers serveur, au cours de laquelle l'incident a été produit.

Un gestionnaire d'alarme 12 est connecté à l'automate de communication 6. Une alarme est produite pour un incident prédéterminé dans une cellule lorsque le cumul d'occurrences de cet incident excède un nombre prédéterminé pendant une période prédéterminée. Des signaux d'alarme peuvent être transmis par le gestionnaire d'alarme 12 à travers des moyens de transmission appropriés 13 vers une station de supervision installée dans un centre national de supervision de réseau CNSR (figure 1) et reliée au serveur par exemple par une liaison à 64 kbit/s à travers un réseau de commutation de paquet de type X25. La station de supervision assure la supervision de plusieurs serveurs SE selon l'invention répartis sur un territoire prédéterminé. Le gestionnaire d'alarme 12 est associé à une base de données d'alarme 14 qui mémorise chaque alarme pour chaque cellule afin que la station de supervision puisse lire les données afférentes à cette alarme, et est associé à un fichier d'alarme 15 qui stocke au fur et à mesure qu'elles surviennent les alarmes avec diverses informations de même nature que celles associées aux incidents.

Dans le serveur SE, un ficher d'événement 16 contient notamment la liste des cellules testées, le cumul des incidents par type, le cumul des alarmes par type, et les nombres d'échecs de communication répertoriés en fonction du type de communication de départ ou d'arrivée et de l'occurrence de l'échec au cours de la communication. En mode automatique du serveur, le ficher d'événement 16 est mis à jour au fur et à mesure pour des cellules testées sélectionnées dans la base de données de cellule 8, pendant une plage horaire prédéterminée, pour des tests respectifs de cellule et pour un nombre de cycle de test prédéterminé. En mode manuel du serveur, une cellule à tester est sélectionnée pour un test particulier à répéter autant de fois que cela est défini pour cette cellule. Le fichier d'événement 16 contient pour ce test de cellule les caractéristiques de désignation de la cellule, le cumul des incidents et des alarmes ainsi que les nombres d'échec de communication.

Le serveur SE comprend également un codec 17 pour code DTMF associé au modem MOD pour communiquer avec les centres de commutation MSC auxquels il est assigné, et pour échanger des séquences de paramètre en code DTMF avec des stations mobiles de test TMS situées dans les zones de localisation associées aux centres MSC.

Les séquences transmises par le serveur SE et par une station mobile de test TMS sont délimitées par des délimiteurs de paramètre correspondant à la touche # d'un clavier téléphonique. Deux délimiteurs de paramètre encadrent chaque paramètre à l'intérieur d'une séquence. Chaque paramètre est composé de digits, c'est-à-dire de chiffres de 0 à 9 codés en des combinaisons de deux fréquences respectives selon le code DTMF.

Comme montré à la figure 4, une **première séquence** SQ1 en code DTMF à transmettre pendant la phase de conversation d'une première communication selon l'invention par le serveur SE vers la station mobile de test TMS comprend NB1 = 29 digits, y compris deux paires de délimiteurs de paramètre marquant des début DE1 et fin FI1 de la séquence SQ1. La séquence SQ1 contient quatre paramètres.

Un premier paramètre est égal au numéro NC de la cellule testée à prendre par la station mobile de test et est composé de cinq digits D1 à D5 successifs entre les deux délimiteurs de paramètre de début de séquence DE1 et un premier délimiteur de paramètre DP1. Un second paramètre est égal au numéro d'appel téléphonique NAS du serveur SE et est composé de dix digits D6 à D15 successifs entre le premier délimiteur de paramètre DP1 et un deuxième délimiteur de paramètre DP2. Un troisième paramètre est égal au numéro de test à réaliser NT et est composé de deux digits D16 et D17 situés entre le deuxième délimiteur de paramètre DP2 et un troisième délimiteur de paramètre DP3. Un quatrième paramètre est égal à un numéro d'ordre de communication NO ayant cinq digits D18 à D22 situés entre le troisième délimiteur de paramètre DP3 et les deux délimiteurs de paramètre marquant la fin FI1 de la séquence SQ1. Le numéro d'ordre de communication NO est composé de deux premiers digits D18 et D19 correspondant au numéro d'identification NS du serveur SE, et de trois autres digits D20, D21 et D22 correspondant au numéro de séquence de communication SC. Le numéro SC est incrémenté d'une unité à chaque communication de départ établie ou non, demandée par le serveur pour une station mobile de test donnée et un test donné.

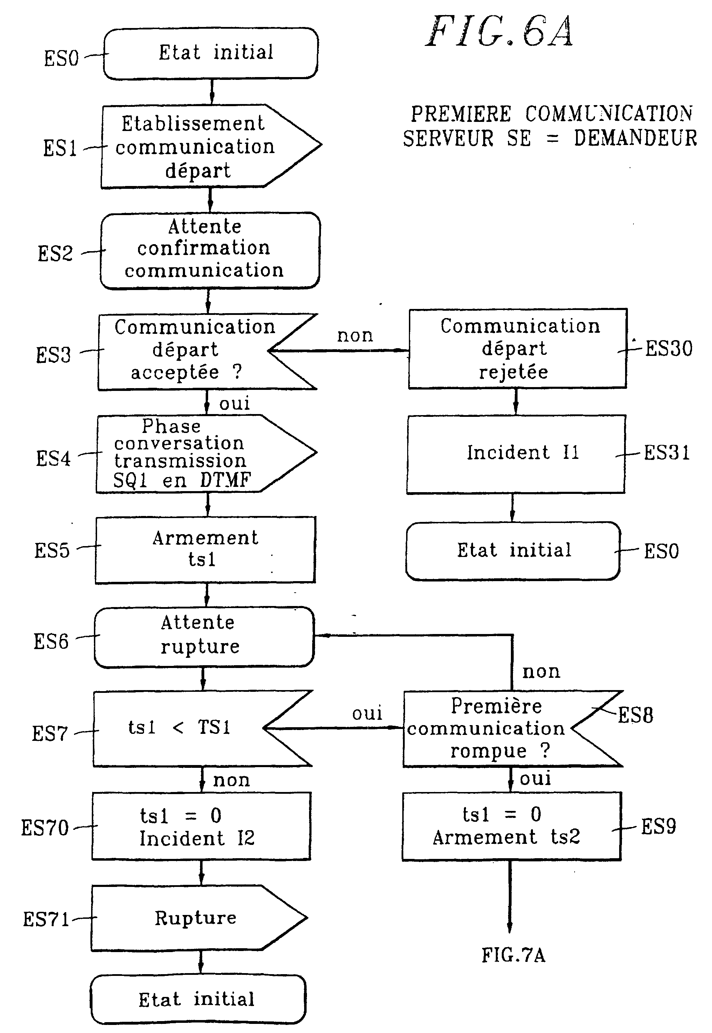

Une **seconde séquence** SQ2 en code DTMF à transmettre par une station mobile de test TMS vers le serveur SE pendant la phase de conversation d'une seconde communication selon l'invention est montrée à la figure 5. La séquence SQ2 est composée de NB2 = 15 digits, y compris deux paires de délimiteurs de paramètre marquant des début DE2 et fin FI2 de la séquence SQ2. La séquence SQ2 comprend deux paramètres. Un premier paramètre à cinq digits d1 à d5 est égal au numéro NC de la cellule prise par la station mobile de test et à détecter par celle-ci dans la première séquence précédente SQ1. Après un délimiteur de paramètre central DC, un second paramètre dans la séquence SQ2 est composé de cinq digits d18 à d22 et est égal au numéro d'ordre de communication NO à détecter par la station mobile de test à la fin de la première séquence précédente SQ1.

Selon l'invention, pour vérifier le bon état de fonctionnement d'une cellule prédéterminée par le serveur SE, **le procédé de test** comprend deux communications. Une première communication est demandée par le serveur SE et constitue une communication de départ pour le serveur et une communication d'arrivée, dite également appel entrant, pour la station mobile de test TMS associée à la cellule prédéterminée. Puis, si la première communication a été convenablement établie, des premiers paramètres ont été convenablement transmis et la première communication a été convenablement rompue, alors la station mobile de test TMS demande, à travers une cellule à tester spécifiée par les premiers paramètres, une seconde communication qui constitue une communication de départ, dite appel sortant, pour la station mobile de test et une communication d'arrivée pour le serveur. Des seconds paramètres sont transmis par la station TMS pendant la phase de conversation de la seconde communication. La cellule à tester à travers laquelle la station mobile de test doit établir la seconde communication n'est pas a priori nécessairement la cellule du réseau à travers laquelle la première communication est établie.

Le déroulement convenable des première et seconde communications successives, sans aucun incident, marque le bon état de fonctionnement de la cellule testée.

La **première communication** est illustrée par les étapes de fonctionnement ES0 à ES9 du serveur SE montrées à la figure 6A et les étapes de fonctionnement EM0 à EM10 de la station mobile de test TMS montrées à la figure 6B.

A des étapes initiales ES0 et EM0, le serveur et la station mobile de test sont au repos, en attente d'établissement d'une quelconque communication, et des temporisations définies ci-après sont maintenues à zéro.

La première communication débute par l'établissement de celle-ci aux étapes ES1 et EM1. L'établissement de la première communication consiste en des premiers messages de signalisation échangés selon le protocole d'établissement de communication du réseau de télécommunication cellulaire GSM, à travers le centre de commutation de rattachement MSC, le serveur SE étant considéré comme un terminal demandeur dans le réseau téléphonique commuté RTC. Pendant l'échange de premiers messages de signalisation protocolaires, le serveur attend à l'étape ES2 la fin de l'établissement de la première communication. La phase de conversation de la première communication débute lorsque la station mobile de test accepte la communication à l'étape ES3, en émettant un message de "connexion" vers le centre MSC, ce qui confirme un marquage d'occupation de canal automatique, simulant un décrochage automatique dans la station mobile de test. La station mobile de test TMS arme une première temporisation tm1 à l'étape EM2, et le serveur produit et transmet la première séquence SQ1 en code DTMF à l'étape ES4, après avoir reçu du centre MSC un signal de "confirmation".

Si pour une raison quelconque la première communication ne peut pas être établie à l'étape ES3, celle-ci est rejetée à l'étape ES30 par le serveur SE et l'automate 6 inscrit un premier incident I1 pour la cellule testée dans le fichier d'événements 16 à l'étape ES31. Le premier incident I1 peut résulter d'une transmission incorrecte ou incomplète d'un message de signalisation entre le centre de commutation de rattachement MSC et la station mobile de test MS, et plus précisément entre le centre de commutation MSC et le contrôleur BSC, ou entre le contrôleur BSC et la station de base BTS, ou entre la station de base BTS et la station mobile de test TMS, pendant la phase d'établissement de la première communication.

Après la transmission de la première séquence SQ1, le serveur SE arme une première temporisation ts1 qui ne peut excéder une valeur TS1, en attente de la rupture de la première communication par la station mobile de test. Au début de la temporisation ts1, la station mobile de test est en attente de la première séquence SQ1 en code DTMF à l'étape EM3. Si aucune première séquence, correcte ou incorrecte comme définie ci-après, n'est reçue par la station mobile de test à l'expiration TM1 de la temporisation tm1, la station mobile de test rompt la première communication à l'étape EM40 et retourne à l'étape initiale EM0.

Si avant l'expiration TM1 de la temporisation tm1 à l'étape EM4, la station mobile de test a reçu une première séquence SQ1, correcte ou incorrecte, à l'étape EM5, la station mobile de test examine la première séquence SQ1 à l'étape EM6. Une première séquence est réputée incorrecte notamment lorsque les cinq digits D1 à D5 sont incorrects ou diffèrent du numéro NC de la cellule testée, ou lorsque le numéro de séquence de communication SC à trois digits est par exemple inférieur à celui contenu dans la première séquence reçue précédemment pour un même test, ou lorsqu'un délimiteur de paramètre est absent ou est incorrectement placé, ou lorsque le nombre de digits dans la première séquence reçue est différent de NB1.

Lorsque la séquence reçue SQ1 est réputée incorrecte, la station mobile de test TMS rompt la première commmunication à l'étape EM60 et revient à l'étape initiale EM0.

Si la première séquence SQ1 en code DTMF est réputée correcte, la station mobile de test arme une seconde temporisation tm2 à l'étape EM7. En particulier, le numéro d'appel téléphonique NAS du serveur et le numéro de test NT contenu dans la séquence reçue SQ1 servent à l'automate 2 pour appeler le serveur au début de la seconde communication, via l'unité de traitement de communication 1, et pour effectuer un test particulier dans la station mobile de test relativement à la cellule testée indiquée par le numéro NC.

Comme montré dans la partie inférieure de la figure 6A, le serveur SE est en attente d'une rupture de la première communication à l'étape ES6, pendant que normalement la station mobile de test TMS reçoit la première séquence SQ1 et l'examine aux étapes EM3 à EM6. Si aux étapes suivantes ES7 et ES8, le serveur constate que la première communication n'a pas été rompue par la station mobile de test avant l'expiration TS1 de la temporisation ts1, l'automate de serveur 6 inscrit un incident de première communication I2 dans le fichier 16 à l'étape E70, rompt la première communication à l'étape ES71 et revient à son état initial à l'étape ESO.

Si le serveur constate une rupture de la première communication avant l'expiration TS1 de la première temporisation tsl aux étapes ES7 et ES8, le serveur arme une seconde temporisation ts2 à l'étape ES9, en attente d'une communication d'arrivée à l'étape ES10. La rupture signalée à l'étape ES8 résulte normalement de l'expiration TM2 de la temporisation tm2 dans la station mobile de test aux étapes EM8 et EM9, puis d'une demande de rupture de la première communication selon le protocole GSM depuis la station mobile de test à l'étape EM10. La durée TM2 est de l'ordre de 20 secondes et est nécessaire pour effectuer un test. La durée TS1 est supérieure à TM2 et est nécessaire à l'examen de la séquence SQ1 et à la réalisation du test dans la station mobile de test TMS.

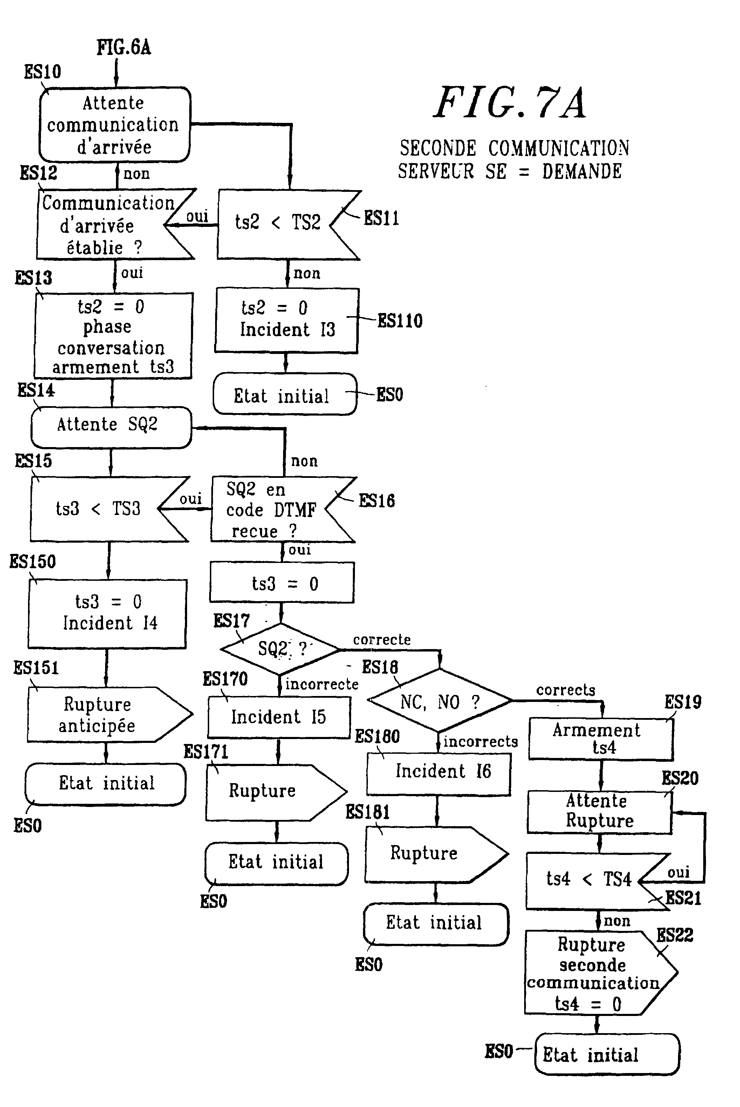

Après l'étape EM10, la station mobile de test TMS procède immédiatement et automatiquement à l'établissement de la **seconde communication**, selon les étapes de fonctionnement EM11 à EM18 montrées à la figure 7B en correspondance avec les étapes de fonctionnement ES10 à ES22 du serveur montrées à la figure 7A.

La seconde communication à l'étape EM11 est établie, d'une manière analogue à l'établissement de la première communication, par des échanges de seconds messages de signalisation selon le protocole d'établissement du réseau de télécommunication cellulaire GSM, à travers le centre de commutation de rattachement MSC. La station mobile de test TMS est considérée comme un terminal demandeur, et le serveur est considéré comme un terminal demandé dans le réseau RTC. Le numéro de cellule NC contenu dans la première séquence reçue SQ1 sert à sélectionner la cellule à tester par la station mobile de test. Le numéro d'appel téléphonique NAS contenu dans la première séquence reçue SQ1 sert à la station mobile de test TMS à appeler le serveur. Pendant l'échange des seconds messages de signalisation protocolaires aux étapes EM12 et ES10 à travers la cellule testée, la station mobile de test attend la réception d'un signal de "connexion" du centre de commutation MSC simulant un décroché automatique du serveur, puis le serveur attend un signal de "confirmation" du centre MSC, ce qui confirme l'acceptation de la seconde communication.

Si à l'étape EM13 la communication n'est pas acceptée par l'un quelconque des moyens de la chaîne de transmission entre la station mobile de test et le serveur, tels que la station de base BS, le contrôleur BSC ou le centre de commutation MSC, la station mobile de test arrête la seconde communication à l'étape EM130 et revient à son état initial, à l'étape EM0.

Si le serveur SE ne reçoit aucune confirmation de seconde communication avant l'expiration TS2 de la seconde temporisation ts2 aux étapes ES11 et ES12, il inscrit un troisième incident I3 dans le fichier 16 à l'étape ES110, et revient à son état initial, à l'étape ES0. L'incident I3 peut résulter d'un arrêt prématuré de l'établissement de la seconde communication par la station mobile de test à l'étape EM130 mais également peut résulter d'une rupture de la première communication aux étapes EM40 et EM60 avant l'expiration TS1 de la temporisation tsl aux étapes ES7 et ES8, sans aucune tentative d'établissement de seconde communication.

Si le serveur SE accepte la seconde communication demandée par la station mobile de test aux étapes ES11 et ES12, le serveur arme une troisième temporisation ts3 à l'étape ES13, et la station mobile de test produit et émet une seconde séquence SQ2 en code DTMF à l'étape EM14, puis arme une troisième temporisation tm3 à l'étape EM15 et attend une rupture de seconde communication à l'étape EM16. La seconde séquence SQ2 contient les paramètres NC et NO mémorisés précédemment après réception de la première séquence SQ1.

Le serveur est alors en attente de réception de la seconde séquence SQ2 à l'étape ES14, et la station mobile de test est en attente de la rupture normale de la seconde communication avant l'expiration TM3 de la temporisation tm3, à l'étape EM16.

Si à l'expiration TS3 de la troisième temporisation ts3 à l'étape ES15, le serveur n'a reçu aucune seconde séquence SQ2 en code DTMF, l'automate 6 signale un quatrième incident I4 au fichier 16 à l'étape ES150 et rompt prématurément la seconde communication à l'étape ES151, et revient à son état initial à l'étape ES0.

Si aux étapes ES15 et ES16, le serveur SE reçoit une seconde séquence SQ2 en code DTMF, correcte ou incorrecte comme définie ci-après, avant l'expiration TS3 de la troisième temporisation ts3, le serveur examine la seconde séquence SQ2 aux étapes suivantes ES17 et ES18. L'examen de la seconde séquence SQ2 au cours de la phase de conversation de la seconde communication repose sur des critères analogues à l'examen de la première séquence SQ1 par la station mobile de test à l'étape EM6.

A l'étape ES17, la seconde séquence SQ2 en code DTMF est considérée comme incorrecte par exemple s'il manque un délimiteur de paramètre entre les deux paramètres NC et SC, ou si le nombre de digits de la seconde séquence SQ2 est différent du nombre NB2. Dans ce cas l'automate de serveur 6 inscrit un cinquième incident I5 dans le fichier d'événement 16 à l'étape ES170, puis rompt la seconde communication à l'étape ES171 et retourne à son état initial à l'étape ES0.

Si la seconde séquence SQ2 est considérée correcte à l'étape ES17, le serveur examine les paramètres NC et NO (NS, SC) contenus dans la séquence reçue SQ2 à l'étape ES18. Si le numéro de la cellule dans la séquence SQ2 est différent de celui NC de la cellule testée, et particulièrement de celui qui était inclus dans la première séquence SQ1 transmise précédement, le serveur notifie un sixième incident I6 à l'étape ES180. Egalement un sixième incident I6 peut être signalé au fichier 16 par l'automate 6 lorsque le second paramètre, c'est-à-dire le numéro d'ordre de communication N0 à cinq digits [d18 à d22], contenu dans la seconde séquence SQ2 est incorrect ; par exemple si le numéro de serveur à deux digits [d18, d19] diffère du numéro d'identification NS du serveur, ou si le numéro de séquence de communication SE à trois digits [d10, d21, d22] diffère de celui [D20, D21, D22] transmis par le serveur pendant la première communication à l'étape ES6. Après avoir notifié le sixième incident I6, le serveur rompt la seconde communication à l'étape ES181, et revient à son état initial à l'étape ES0.

Le serveur SE arme une quatrième temporisation ts4 à l'étape ES19 après avoir constaté que la seconde séquence reçue SQ2 est correcte et contient des paramètres également corrects. Le serveur attend alors à l'étape ES20 une rupture de la seconde communication qui peut être déclenchée soit par le serveur, soit par la station mobile de test.

Comme montré en partie inférieure des figures 7A et 7B, il est supposé que le serveur doit rompre en premier la seconde communication. La durée maximum TM3 de la temporisation tm3 est supérieure à la durée maximum TS4 de la temporisation ts4 et est assez longue pour permettre au serveur d'examiner la séquence reçue SQ2.

Ainsi, normalement la quatrième temporisation ts4 expire à l'étape ES21 avant l'expiration TM3 de la temporisation tm3 à l'étape EM17 dans la station mobile de test. Lorsque la temporisation ts4 atteint sa limite TS4, le serveur SE rompt normalement la seconde communication à l'étape ES22 et revient à son état initial à l'étape ES0. Cette libération est confirmée à la station mobile de test par un échange de messages de signalisation protocolaires, ce qui commande la rupture de la seconde communication dans la station mobile de test à l'étape EM18, et le retour à l'état initial de la station mobile de test à l'étape EM0. Si dans la station mobile de test, la troisième temporisation tm3 atteint sa limite TM3, avant de recevoir la confirmation de la rupture de la seconde communication par le serveur, la station mobile de test rompt la seconde communication à l'étape EM170 et revient à son état initial à l'étape EM0.

Lorsque le serveur SE a accompli successivement toutes les étapes ES0 à ES22 et la station mobile de test TMS a accompli successivement toutes les étapes EM0 à EM18, c'est-à-dire lorsqu'aucun incident n'est signalé pendant les première et seconde communications selon l'invention, l'automate 6 du serveur ne peut que constater le bon fonctionnement de la cellule testée, c'est-à-dire des moyens électroniques associés à la cellule testée.

## Revendications

1. Procédé pour tester une cellule dans un réseau de télécommunication cellulaire comprenant des moyens de communication fixes (MSC, BSC) desservant plusieurs stations de base (BTS) associées respectivement à des cellules du réseau **caractérisé par** :
- un placement d'une station mobile de test (TMS) dans le réseau, et la liaison d'un moyen terminal (SE) aux moyens de communication fixes (MSC, BSC),
et par les étapes suivantes :
- établissement (ES1, EM1) d'une première communication demandée par le moyen terminal entre le moyen terminal (SE) et la station mobile de test (TMS),
- transmission (ES4, EM5) de premiers paramètres (SQ1) depuis le moyen terminal (SE) vers la station mobile de test (TMS) si la première communication est établie,
- rupture (EM10, ES8) de la première communication par la station mobile de test (TMS) si les premiers paramètres (SQ1) sont reçus dans la station mobile de test,
- établissement (EM11, ES12) d'une seconde communication demandée par la station mobile entre la station mobile de test (TMS) et le moyen terminal (SE) à travers la cellule à tester après la rupture de la première communication,
- émission (EM14, ES16) de seconds paramètres (SQ2) depuis la station mobile de test (TMS) vers le moyen terminal (SE) si la seconde communication est établie, et
- rupture (ES20, EM17) de la seconde communication si les seconds paramètres sont reçus dans le moyen terminal (SE).

2. Procédé conforme à la revendication 1, comprenant un arrêt (ES0, ES71, ES110, ES171, ES181) de la communication en cours par le moyen terminal (SE) en réponse à l'un au moins des incidents suivants détecté par le moyen terminal (SE) :
- défaut d'établissement de la première communication (I1),
- absence de rupture (I2) de la première communication après expiration (TS1) d'une première temporisation (ts1) armée après la transmission (ES4) des premiers paramètres (SQ1),
- défaut d'établissement (I3) de la seconde communication après expiration (TS2) d'une seconde temporisation (ts2) armée après la rupture de la première communication (ES8),
- absence de réception (I4) des seconds paramètres (SQ2) après expiration (TS3) d'une troisième temporisation (ts3) armée après l'établissement (ES12) de la seconde communication, et
- erreur (I5, I6) dans les seconds paramètres (SQ2) reçus dans le moyen terminal (SE).

3. Procédé conforme à la revendication 2, selon lequel l'erreur dans les seconds paramètres (SQ2) reçus par le moyen terminal (SE) est l'une des erreurs suivantes (I5, I6) :
- nombre incorrect de digits représentatifs de l'un des seconds paramètres (NC, NO),
- digit erroné (DE2, DC, FI2) précédant ou succédant à l'un des seconds paramètres (NC, NO), et
- l'un erroné des seconds paramètres (NC, NO).

4. Procédé conforme à la revendication 2 ou 3, selon lequel le moyen terminal (SE) effectue cycliquement lesdites étapes suivantes énoncées dans la revendication 1 pour tester périodiquement ladite cellule à tester, cumule les incidents (I1 à I6) et produit une alarme lorsque le cumul d'un incident excède un nombre prédéterminé pendant une période prédéterminée.

5. Procédé conforme à l'une quelconque des revendications 1 à 4, comprenant une rupture de la première communication par la station mobile de test (TMS) en réponse à l'un des événements suivants (EM40 ; EM60) :
- absence de réception des premiers paramètres (SQ1) après expiration (TM1) d'une temporisation prédéterminée (tm1) armée par la station mobile de test après l'établissement de la première communication, et
- erreur dans l'un des premiers paramètres (SQ1) reçus dans la station mobile de test.

6. Procédé conforme à l'une quelconque des revendications 1 à 5, comprenant une rupture de la seconde communication par la station mobile de test (TMS) en réponse à l'un des événements suivants (EM130 ; EM171) :
- arrêt anticipé de la seconde communication avant l'émission des seconds paramètres (SQ2) par la station mobile de test (TMS), et
- expiration (TM3) d'une temporisation prédéterminée (tm3) armée par la station mobile de test après l'émission des seconds paramètres (SQ2).

7. Procédé conforme à l'une quelconque des revendications 1 à 6, selon lequel au moins l'un (D1 à D5 ; D18 à D22) des premiers paramètres (SQ1) reçus correctement par la station mobile de test (TMS) est l'un (d1 à d5 ; d18 à d22) des seconds paramètres (SQ2) émis par la station mobile de test (TMS).

8. Procédé conforme à l'une quelconque des revendications 1 à 7, selon lequel :
- les premiers paramètres (SQ1) comprennent l'un au moins des numéros suivants : un numéro (D1 à D5) de la cellule à tester, un numéro d'appel téléphonique (D6 à D15) du moyen terminal (SE), un numéro prédéterminé (D18, D19) identifiant le moyen terminal (SE), et un numéro (D20, D21, D22) identifiant ladite première communication, et
- les seconds paramètres (SQ2) comprennent l'un au moins desdits numéro (D1 à D5) de la cellule à tester, numéro prédéterminé (d18, d19) identifiant le moyen terminal (SE), et numéro (d20, d21, d22) identifiant ladite première communication.

9. Procédé conforme à l'une quelconque des revendications 1 à 8, selon lequel les premiers paramètres sont transmis par le moyen terminal (SE) sous la forme d'une séquence de digits (SQ1) en code à multifréquence (DTMF), et les seconds paramètres sont émis par la station mobile de test (TMS) sous la forme d'une séquence de digits (SQ2) en code à multifréquence (DTMF).

10. Procédé conforme à l'une quelconque des revendications 1 à 9, selon lequel le moyen terminal (SE) est relié à travers le réseau téléphonique commuté (RTC) aux moyens de communication fixes (MSC, BSC).

11. Procédé conforme à l'une quelconque des revendications 1 à 10, selon lequel le moyen terminal (SE) effectue cycliquement lesdites étapes suivantes énoncées à la revendication 1 pour des cellules à tester prédéterminées dans le réseau de télécommunication cellulaire.

## Patentansprüche

1. Verfahren zum Prüfen einer Zelle in einem zellularen Telekommunikationsnetz, umfassend feste Kommunikationsmittel (MSC, BSC), die mehrere, jeweils Zellen des Netzes zugeordnete Basisstationen (BTS) versorgen, **gekennzeichnet durch**:
- eine Anordnung einer mobilen Prüfstation (TMS) im Netz und die Verbindung eines Endgerätmittels (SE) mit den festen Kommunikationsmitteln (MSC, BSC),
und **durch** die folgenden Schritte:
- Einrichtung (ES1, EM1) einer ersten Kommunikation, die **durch** das Endgerätmittel zwischen dem Endgerätmittel (SE) und der mobilen Prüfstation (TMS) angefordert worden ist,
- Übertragung (ES4, EM5) erster Parameter (SQ1) vom Endgerätmittel (SE) aus zur mobilen Prüfstation (TMS), wenn die erste Kommunikation eingerichtet ist,
- Unterbrechung (EM10, ES8) der ersten Kommunikation **durch** die mobile Prüfstation (TMS), wenn die ersten Parameter (SQ1) in der mobilen Prüfstation empfangen werden,
- Einrichtung (EM11, ES12) einer zweiten Kommunikation, die **durch** die mobile Station zwischen der mobilen Prüfstation (TMS) und dem Endgerätmittel (SE) über die zu prüfende Zelle nach der Unterbrechung der ersten Kommunikation angefordert worden ist,
- Sendung (EM14, ES16) zweiter Parameter (SQ2) von der mobilen Prüfstation (TMS) aus zum Endgerätmittel (SE), wenn die zweite Kommunikation eingerichtet ist, und
- Unterbrechung (ES20, EM17) der zweiten Kommunikation, wenn die zweiten Parameter im Endgerätmittel (SE) empfangen werden.

2. Verfahren nach Anspruch 1, umfassend einen Abbruch (ES0, ES71, ES110, ES171, ES181) der in Gang befindlichen Kommunikation durch das Endgerätmittel (SE) in Antwort auf wenigstens einen der durch das Endgerätmittel (SE) festgestellten folgenden Vorfälle:
- Einrichtungsfehler der ersten Kommunikation (I1),
- Fehlen einer Unterbrechung (I2) der ersten Kommunikation nach Ablauf (TS1) einer ersten vorgesehenen Verzögerungszeit (ts1) nach der Übertragung (ES4) der ersten Parameter (SQ1),
- Einrichtungsfehler (I3) der zweiten Kommunikation nach Ablauf (TS2) einer zweiten vorgesehenen Verzögerungszeit (ts2) nach der Unterbrechung der ersten Kommunikation (ES8),
- Fehlen eines Empfangs (I4) der zweiten Parameter (SQ2) nach Ablauf (TS3) einer dritten vorgesehenen Verzögerungszeit (ts3) nach der Einrichtung (ES12) der zweiten Kommunikation, und
- Fehler (I5, I6) in den im Endgerätmittel (SE) empfangenen zweiten Prametern (SQ2).

3. Verfahren nach Anspruch 2, nach dem der Fehler in den vom Endgerätmittel (SE) empfangenen zweiten Parametern (SQ2) einer der folgenden Fehler (I5, I6) ist:
- nicht korrekte Zahl von Binärziffern, die für einen der zweiten Parameter (NC, NO) repräsentativ sind,
- fehlerhafte Binärziffer (DE2, DC, FI2), die einem der zweiten Parameter (NC, NO) vorhergeht oder diesem folgt, und
- einen fehlerhaften der zweiten Parameter (NC, NO).

4. Verfahren nach Anspruch 2 oder 3, nach dem das Endgerätmittel (SE) zyklisch die folgenden, im Anspruch 1 aufgezählten Schritte ausführt, um die zu prüfende Zelle periodisch zu prüfen, die Vorfälle (I1 bis E6) kumuliert und einen Alarm erzeugt, wenn die Summierung eines Vorfalls eine vorbestimmte Zahl während eines vorbestimmten Zeitabschnitts überschreitet.

5. Verfahren nach einem beliebigen der Ansprüch 1 bis 4, umfassend eine Unterbrechung der ersten Kommunikation durch die mobile Prüfstation (TMS) in Antwort auf eines der folgenden Ereignisse (EM40; EM60):
- Fehlen eines Empfangs der ersten Parameter (SQ1) nach Ablauf (TM1) einer vorgesehenen vorbestimmten Verzögerungszeit (tm1 durch die mobile Prüfstation nach der Einrichtung der ersten Kommunikation und
- Fehler in einem der in der mobilen Prüfstation empfangenen ersten Parameter (SQ1).

6. Verfahren nach einem beliebigen der Ansprüche 1 bis 5, umfassend eine Unterbrechung der zweiten Kommunikation durch die mobile Prüfstation (TMS) in Antwort auf eines der folgenden Ereignisse (EM130; EM171):
- vorweggenommene Unterbrechung der zweiten Kommunikation vor dem Senden der zweiten Parameter (SQ2) durch die mobile Prüfstation (TMS) und
- Ablauf (TM3) einer vorbestimmten vorgesehenen Verzögerung (tm3) durch die mobile Prüfstation nach dem Senden der zweiten Parameter (SQ2).

7. Verfahren nach einem beliebigen der Ansprüche 1 bis 6, nach dem wenigstens einer (D1 bis D5; D18 bis D22) der korrekt durch die mobile Prüfstation (TMS) empfangenen ersten Parameter (SQ1) einer (d1 bis d5; d1S bis d22) der durch die mobile Prüfstation (TMS) gesendeten zweiten Parameter (SQ2) ist.

8. Verfahren nach einem beliebigen der Ansprüche 1 bis 7, nach dem :
- die ersten Parameter (SQ1) eine wenigstens der folgenden Zahlen umfassen: eine Zahl (D1 bis D5) der zu prüfenden Zelle, eine Telefonrufnummer (D6 bis D15) des Endgerätmittels (SE), eine vorbestimmte Zahl (D18, D19), die das Endgerätmittel (SE) identifiziert, und eine Zahl (D20, D21, D22), die die erste Kommunikation identifiziert, und
- die zweiten Parameter (SQ2) eine wenigstens der Zahl (D1 bis D5) der besagten zu prüfenden Zelle, vorbestimmten Zahl (d18, d19), die das Endgerätmittel (SE) identifiziert, und Zahl (d20, d21, d22), die die erste Kommunikation identifiziert, umfassen.

9. Verfahren nach einem beliebigen der Ansprüche 1 bis 8, nach dem die ersten Parameter durch das Endgerätmittel (SE) in der Form einer Binärziffersequenz (SQ1) im Mehrfrequenzcode (DTMF) übertragen werden und die zweiten Parameter durch die mobile Prüfstation (TMS) in der Form einer Binärziffersequenz (SQ2) im Mehrfrequenzcode (DTMF) gesendet werden.

10. Verfahren nach einem beliebigen der Ansprüche 1 bis 9, nach dem das Endgerätmittel (SE) über das Telefonwählnetz (RTC) mit den festen Kommunikationsmitteln (MSC, BSC) verbunden ist.

11. Verfahren nach einem beliebigen der Ansprüche 1 bis 10, nach dem das Endgerätmittel (SE) zyklisch die folgenden, im Anspruch 1 aufgezählten Schritte zyklisch für vorbestimmte, zu prüfende Zellen im zellularen Telekommunikationsnetz ausführt.

## Claims

1. A method of testing a cell in a cellular telecommunication network comprising fixed communication means (MSC, BSC) serving a plurality of base transceiver stations (BTS) respectively associated with cells of the network, **characterized by** :
- a test mobile station (TMS) being placed in said cellular telecommunication network, and a terminal means (SE) being connected to the fixed communication means (MSC, BSC),
and by the following steps:
- setting up (ES1, EM1) a first call requested by the terminal means between the terminal means (SE) and the test mobile station (TMS),
- transmitting (ES4, EM5) first parameters (SQ1) from the terminal means (SE) to the test mobile station (TMS) if the first call is set up,
- clearing down (EM10, ES8) the first call by the test mobile station (TMS) if the first parameters (SQ1) are received in the test mobile station,
- setting up (EM11, ES12) a second call requested by the test mobile station between the test mobile station (TMS) and the terminal means (SE) via the cell after the first call is cleared down,
- emitting (EM14, ES16) second parameters (SQ2) from the test mobile station (TMS) to the terminal means (SE) if the second call is set up, and
- clearing down (ES20, EM17) the second call if the second parameters are received in the terminal means (SE).

2. A method according to claim 1, comprising termination (ES0, ES71, ES110, ES171, ES181) of the call in progress by the terminal means (SE) in response to detection of at least one of the following incidents by the terminal means (SE) :
- failure to set up the first call (I1),
- absence of clearing down (I2) of the first call after expiry (TS1) of a first time-delay (ts1) set after transmitting (ES4) the first parameters (SQ1),
- failure to set up (I3) the second call after expiry (TS2) of a second time-delay (ts2) set after clearing down the first call (ES8),
- absence of reception (I4) of the second parameters (SQ2) after expiry (TS3) of a third time-delay (ts3) set after setting up (ES12) the second call, and
- error (I5, I6) in the second parameters (SQ2) received in the terminal means (SE).

3. A method according to claim 2, wherein the error in the second parameters (SQ2) received by the terminal means (SE) is one of the following errors (I5, I6) :
- incorrect number of digits representing one of the second parameters (NC, NO),
- erroneous digit (DE2, DC, FI2) preceding or following one of the second parameters (NC, NO), and
- erroneous one out of the second parameters (NC, NO).

4. A method according to claim 2 or 3, wherein the terminal means (SE) executes cyclically the following steps stated in claim 1 to test said cell to be tested periodically, cumulatively counts incidents (I1 to I6) and produces an alarm if the cumulative counts of the incident exceeds a predetermined number during a predetermined period.

5. A method according to any one of claims 1 to 4, comprising a clearing down of the first call by the test mobile station (TMS) in response to one of the following events (EM40 ; EM60) :
- absence of reception of the first parameters (SQ1) after expiry (TM1) of a predetermined time-delay (tm1) set by the test mobile station after setting up the first call, and
- error in one of the first parameters (SQ1) received in the test mobile station.

6. A method according to any one of claims 1 to 5, comprising a clearing down of the second call by the test mobile station (TMS) in response to any of the following events (EM130 ; EM171) :
- anticipated termination of the second call before the second parameters (SQ2) are emitted from the test mobile station (TMS), and
- expiry (TM3) of a predetermined time-delay (tm3) set by the test mobile station after the second parameters (SQ2) are emitted.

7. A method according to any one of claims 1 to 6, wherein at least one (D1 to D5 ; D18 to D22) of the first parameters (SQ1) received correctly by the test mobile station (TMS) is one (d1 to d5 ; d18 to d22) of the second parameters (SQ2) emitted from the test mobile station (TMS).

8. A method according to any one of claims 1 to 7, wherein :
- the first parameters (SQ1) include at least one of following numbers : a number (D1 to D5) of the cell under test, a telephone number (D6 to D15) of the terminal means (SE), a predetermined number (D18, D19) identifying the terminal means (SE), and a number (D20, D21, D22) identifying said first call, and
- the second parameters (SD2) include at least one of said number (D1 to D5) of the cell under test, predetermined number (d18, d19) identifying the terminal means (SE), and number (d20, d21, d22) identifying said first call.

9. A method according to any one of claims 1 to 8, wherein the first parameters are transmitted from the terminal means (SE) in the form of a sequence of digits (SQ1) in multifrequency code (DTMF), and the second parameters are emitted from the test mobile station (TMS) in the form of a sequence of digits (SQ2) in multifrequency code (DTMF).

10. A method according to any one of claims 1 to 9, wherein the terminal means (SE) is connected via the switched telephone network (RTC) to the fixed communication means (MSC, BSC).

11. A method according to any one of claims 1 to 10, wherein the terminal means (SE) executes cyclically said following steps stated in claim 1 for predetermined cells to be tested in the cellular telecommunication network.
